# EUROPEAN PATENT SPECIFICATION

(11) **EP 2 767 733 B1**
(45) Date of publication and mention of the grant of the patent: **05.07.2017**
(21) Application number: 12834367.0
(22) Date of filing: 18.09.2012
(51) Int. Cl.: F16H 61/688, F16H 59/50, F16H 63/50

(54) **POWER TRANSMISSION CONTROL DEVICE FOR VEHICLE**
STEUERUNGSVORRICHTUNG FÜR EIN DOPPELKUPPLUNGSGETRIEBE EINES FAHRZEUGS
DISPOSITIF DE COMMANDE DE TRANSMISSION DE PUISSANCE POUR VÉHICULE

(30) Priority: 20.09.2011 JP 2011204077
(43) Date of publication of application: 20.08.2014
(73) Proprietor: Aisin AI Co., Ltd., Nishio-shi, Aichi 445-0006 (JP)
(72) Inventor: INOUE, Hiroki, Aichi 445-0006 (JP); MIYAZAKI, Takeshige, Aichi 445-0006 (JP)
(74) Representative: Ascherl, Andreas
(86) International application number: PCT/JP2012/073778
(87) International publication number: WO 2013/042645

(56) References cited:
- WO-A2-03/074905
- WO-A2-2005/080830
- DE-A1- 10 247 970
- DE-A1- 10 308 692
- JP-A- S 631 842
- JP-A- 2010 048 416
- JP-A- 2010 538 223
- US-A- 5 303 794

## Description

### TECHNICAL FIELD

The present invention relates to a power transmission control apparatus for a vehicle.

### BACKGROUND ART

As described in, for example, Japanese Patent Application Laid-Open (*kokai*) No. 2010-48416, there has been known a transmission which includes first and second input shafts for receiving power from an engine of a vehicle; an output shaft for outputting power to drive wheels of the vehicle; a first mechanism section which selectively realizes an established state in which any one of some (e.g., odd-numbered gear stages including 1-st) of all the gear stages to thereby form a power transmission system between the first input shaft and the output shaft or a release state in which no gear stage is established and no power transmission system is formed between the first input shaft and the output shaft; and a second mechanism section which selectively realizes an established state in which any one of the remaining gear stages (e.g., even-numbered gear stages including 2-nd) to thereby form a power transmission system between the second input shaft and the output shaft or a release state in which no gear stage is established and no power transmission system is formed between the second input shaft and the output shaft.

This transmission includes first and second clutches in combination. The first clutch is interposed between the output shaft of the engine and the first input shaft and can adjust the maximum torque (first clutch torque) which can be transmitted between the output shaft of the engine and the first input shaft by adjusting the clutch stroke thereof. The second clutch is interposed between the output shaft of the engine and the second input shaft and can adjust the maximum torque (second clutch torque) which can be transmitted between the output shaft of the engine and the second input shaft by adjusting the clutch stroke thereof. A mechanism obtained through such a combination is also called a "double clutch transmission (hereinafter also referred to as "DCT").

In the following description, a system constituted by the first clutch, the first input shaft, and the first mechanism section will be referred to as a "first system," and a system constituted by the second clutch, the second input shaft, and the second mechanism section will be referred to as a "second system." Also, a state in which clutch torque is greater than "0"; i.e., a state in which a clutch transmits power, will be referred to an "engaged state," and a state in which clutch torque is "0"; i.e., a state in which a clutch does not transmits power, will be referred to a "disengaged state."

When the DCT is controlled, one gear stage to be achieved (hereinafter referred to as the "selected gear stage") is selected on the basis of a movement of a shift lever by a driver of the vehicle and/or travelling conditions of the vehicle. In the following description, of the first and second mechanism sections, the first and second clutches, the first and second input shafts, and the first and second systems, those corresponding to the selected gear stage will be referred to as the "selected mechanism section," the "selected clutch," the "selected input shaft," and the "selected system"; and those not corresponding to the selected gear stage will be referred to as the "unselected mechanism section," the "unselected clutch," the "unselected input shaft," and the "unselected system."

When a gear stage is selected, the selected clutch is controlled into an engaged state (the clutch torque of the selected clutch is controlled to a torque for complete engagement larger than the drive torque of the engine) in a state in which the selected gear stage is established in the selected mechanism section, and the unselected clutch is controlled into a disengaged state (the clutch torque of the unselected clutch is controlled to zero). As a result, a power transmission system which has a speed reduction ratio of the selected gear stage is formed between the output shaft of the engine and the output shaft of the transmission via the selected system. Drive torque (engine torque) of the engine is transmitted to the drive wheels via the power transmission system, whereby the vehicle can be accelerated.

Meanwhile, in the unselected system, the unselected clutch is in a disengaged state. Accordingly, the unselected mechanism section can be caused to wait in a state in which a gear which is selected (may be selected) next is established (specifically, an adjacent gear stage on the higher-speed-side or lower-speed-side of the selected gear stage is established (typically, a gear stage which is one stage higher or lower than the selected gear stage is established; however, a gear stage which is three or five stages higher or lower than the selected gear stage may be established)). By making use of this, the following operation is enabled. Even in the case where a gear shift operation (upshift to a higher-speed-side adjacent gear stage or downshift to a lower-speed-side adjacent gear stage) results in switching of the selected and unselected systems between the first and second systems, the engine torque can be continuously transmitted, without interruption, to the output shaft of the transmission (accordingly, to the drive wheels), through simultaneous execution of an "operation of bringing the engaged one of the first and second clutches into a disengaged state" and an "operation of bringing the disengaged one of the first and second clutches into an engaged state." As a result, gear shift shock can be reduced. WO 2005/080830 A2 discloses two clutches simultaneously transmitting torques during acceleration processes thus ensuring continuous torque transmission between the drive shaft and the output shaft. DE 102 47 970 A1 discloses a power transmission control apparatus according to the preamble part of claim 1.

### SUMMARY OF THE INVENTION

In the DCT, when the selected gear stage is changed from the currently established gear stage to a higher-speed-side or lower-speed-side gear stage (typically, a gear stage which is one stage higher or lower than the selected gear stage may be established) (namely, at the time of gear shift operation), the switching of the selected and unselected clutches between the first and second clutches is performed. In generally, operation as described below is performed at the time of the switching.

First, the clutch torque of a clutch which has newly become the selected clutch as a result of the switching is increased from zero to a "selected-side torque which is larger than zero but smaller than the torque for complete engagement," and the clutch torque of a clutch which has newly become the unselected clutch as a result of the switching is decreased from the torque for complete engagement to an "unselected-side torque which is larger than zero but smaller than the selected-side torque." Also, the engine torque is decreased from a value corresponding to an accelerator opening; i.e., an operation quantity of an accelerator.

After that, the engine torque is increased to the value corresponding to the accelerator opening. In addition, the clutch torque of the clutch which has newly become the selected clutch is increased from the selected-side torque and is adjusted to the torque for complete engagement, and the clutch torque of the clutch which has newly become the unselected clutch is decreased from the unselected-side torque and is adjusted to zero. By the above-described operation, the gear shift operation is smoothly achieved.

Incidentally, at the time of the gear shift operation of the above-described DCT, an unavoidable variation is produced in the drive torque transmitted to the drive wheels. Accordingly, if the gear shift operation of the DCT is performed in a state in which the drive wheels easily slip, for example, when the vehicle travels on a road surface which is low in coefficient of friction (low-*µ* road surface), the travel state of the vehicle is likely to become instable due to a variation in the drive torque of the drive wheels.

An object of the present invention is to provide a power transmission control apparatus for a vehicle in which a DCT is utilized and which can suppress occurrence of wheel slippage which occurs when a gear shift operation is performed in a state in which the drive wheels easily slip.

According to an aspect of the invention, this object is achieved by a power transmission control apparatus as defined in claim 1. Advantageous embodiments may be configured acccording to claim 2. A power transmission control apparatus for a vehicle according to the present invention comprises a transmission (T/M) which includes a "first input shaft (Ai1)," a "second input shaft (Ai2)," an "output shaft (AO)," a "first mechanism section (M1)," and a "second mechanism section (M2)," which are the same as those described above; a first clutch (C1), and a second clutch (C2). Preferably, the above-described first group of gear stages includes a plurality of odd-numbered gear stages including 1-st, and the above-described second group of gear stages includes a plurality of even-numbered gear stages including 2-nd.

This power transmission control apparatus is characterized in that the above-mentioned control means includes detection means for detecting a slippage of a wheel of the vehicle and in that in a state in which the slippage of the wheel is detected, the above-mentioned "selected-side torque" and the above-mentioned "unselected-side torque" are decreased (T3 → T1, T4 → T2) as compared with the case where no slippage of the wheel is detected, and the gradient at which the torque of the above-mentioned internal combustion engine is increased to the value corresponding to the operation quantity of the acceleration operation member is decreased (g2 → g1) as compared with the case where no slippage of the wheel is detected.

By virtue of this configuration, in a situation where the drive wheel easily slips, the "unselected-side torque" is decreased. Therefore, during a gear shift operation, it becomes easier for the rotational speed of the output shaft of the internal combustion engine to approach the rotational speed of the new selected input shaft. In addition, since the "selected-side torque" is decreased, the torque which is transmitted to the drive wheel through the new selected system during the gear shift operation (accordingly, the acceleration of the vehicle) can be decreased. As result, occurrence of slippage of wheels (in particular, the drive wheel) can be suppressed. Therefore, the travel state of the vehicle hardly becomes unstable.

### BRIEF DESCRIPTION OF THE DRAWINGS

FIG. 1 is a schematic diagram of a power transmission control apparatus according to an embodiment of the present invention.
FIG. 2 is a graph showing the "stroke - torque characteristics" of first and second clutches shown in FIG. 1.
FIG. 3 is a graph showing a gear-shift map which represents a previously determined relation between "selected gear stage" and "combination between vehicle speed and accelerator opening," and which is referred by an ECU shown in FIG. 1.
FIG. 4 is a flowchart showing processing for executing control at the time of gear shift, which is executed by the ECU shown in FIG. 1.
FIG. 5 is a time chart showing an example of a case where a special control is started and executed by the power transmission control apparatus according to the embodiment of the present invention in a period in which the vehicle is traveling.

### MODE FOR CARRYING OUT THE INVENTION

A power transmission control apparatus for a vehicle according to an embodiment of the present invention (present apparatus) will now be described with reference to the drawings. The present apparatus includes a transmission T/M, a first clutch C1, a second clutch C2, and an ECU. The transmission T/M has six gear stages (first to sixth gears) for moving the vehicle frontward, and a single gear stage (reverse gear) for moving the vehicle backward.

The transmission T/M includes a first input shaft Ai1, a second input shaft Ai2, an output shaft AO, a first mechanism section M1, and a second mechanism section M2. The first and second input shafts Ai1, Ai2 are coaxially supported by a casing (not shown) such that they can rotate relative to each other. The output shaft AO is supported by the casing at a position shifted from the first and second input shafts Ai1, Ai2, and in parallel with the first and second input shafts Ai1, Ai2.

The first input shaft Ai1 is connected via the first clutch C1 to an output shaft AE of an engine E/G, which is a drive source of the vehicle. Similarly, the second input shaft Ai2 is connected via the second clutch C2 to the output shaft AE of the engine E/G. The output shaft AO is connected to drive wheels of the vehicle for power transmission.

The first mechanism section M1 includes a first-gear drive gear G1i and a first-gear driven gear G1o, which are in meshing engagement with each other at all times; a third-gear drive gear G3i and a third-gear driven gear G3o, which are in meshing engagement with each other at all times; a fifth-gear drive gear G5i and a fifth-gear driven gear G5o, which are in meshing engagement with each other at all times; a reverse drive gear GRi and a reverse driven gear GRo, which are not in meshing engagement with each other at all times; and a reverse idle gear GRd which is in meshing engagement with the drive gear GRi and the driven gear GRo at all times; and sleeves S1, S2. The sleeves S1, S2 are driven by sleeve actuators AS1, AS2, respectively.

Of the drive gears G1 i, G3i, G5i, and GRi, the drive gears G1i and GRi are fixed to the first input shaft Ai1 for unitary rotation therewith; and the drive gears G3i and G5i are supported by the first input shaft Ai1 such that they can rotate relative to the first input shaft Ai1. Of the driven gears G1o, G3o, G5o, and GRo, the driven gears G1o and GRo are supported by the output shaft AO such that they can rotate relative to the output shaft AO; and the driven gears G3o and G5o are fixed to the output shaft AO for unitary rotation therewith.

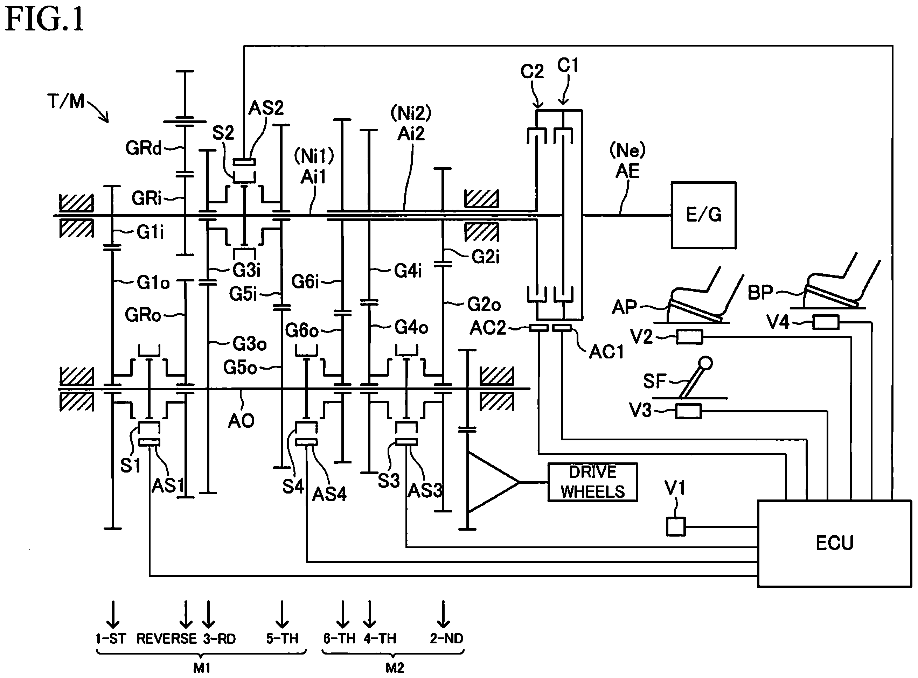

The sleeve S1 is always in spline engagement with a hub which rotates unitarily with the output shaft AO such that the sleeve S1 can move in the axial direction. When the sleeve S1 is located at the position (non-connected position) shown in FIG. 1, the sleeve S1 spline-engages with neither a first-gear piece which rotates unitarily with the driven gear G1o nor a reverse piece which rotates unitarily with the driven gear GRo. When the sleeve S1 moves from the non-connected position to a left-hand-side position (first-gear position), the sleeve S1 spline-engages with the first-gear piece. When the sleeve S1 moves from the non-connected position to a right-hand-side position (reverse position), the sleeve S1 spline-engages with the reverse piece.

The sleeve S2 is always in spline engagement with a hub which rotates unitarily with the first input shaft Ai1 such that the sleeve S2 can move in the axial direction. When the sleeve S2 is located at the position (non-connected position) shown in FIG. 1, the sleeve S2 spline-engages with neither a third-gear piece which rotates unitarily with the drive gear G3i nor a fifth-gear piece which rotates unitarily with the drive gear G5i. When the sleeve S2 moves from the non-connected position to a left-hand-side position (third-gear position), the sleeve S2 spline-engages with the third-gear piece. When the sleeve S2 moves from the non-connected position to a right-hand-side position (fifth-gear position), the sleeve S2 spline-engages with the fifth-gear piece.

By virtue of the above-described configuration, in the first mechanism section M1, when both the sleeves S1 and S2 are maintained at their non-connected positions, there can be established a neutral state in which no power transmission system is formed between the first input shaft Ai1 and the output shaft AO. When the sleeve S1 moves to the first-gear position in the neutral state, a power transmission system having a first-gear speed reduction ratio is formed (first gear is established). When the sleeve S1 moves to the reverse position in the neutral state, a power transmission system having a reverse speed reduction ratio is formed (reverse is established). When the sleeve S2 moves to the third-gear position in the neutral state, a power transmission system having a third-gear speed reduction ratio is formed (third gear is established). When the sleeve S2 moves to the fifth-gear position in the neutral state, a power transmission system having a fifth-gear speed reduction ratio is formed (fifth gear is established).

The second mechanism section M2 includes a second-gear drive gear G2i and a second-gear driven gear G2o, which are in meshing engagement with each other at all times; a fourth-gear drive gear G4i and a fourth-gear driven gear G4o, which are in meshing engagement with each other at all times; a sixth-gear drive gear G6i and a sixth-gear driven gear G6o, which are in meshing engagement with each other at all times; and sleeves S3, S4. The sleeves S3, S4 are driven by sleeve actuators AS3, AS4, respectively.

All the drive gears G2i, G4i, and G6i are fixed to the second input shaft Ai2 for unitary rotation therewith. All the driven gears G2o, G4o, and G6o are supported by the output shaft AO such that they can rotate relative to the output shaft AO.

The sleeve S3 is always in spline engagement with a hub which rotates unitarily with the output shaft AO such that the sleeve S3 can move in the axial direction. When the sleeve S3 is located at the position (non-connected position) shown in FIG. 1, the sleeve S3 spline-engages with neither a second-gear piece which rotates unitarily with the driven gear G2o nor a fourth-gear piece which rotates unitarily with the driven gear G4o. When the sleeve S3 moves from the non-connected position to a right-hand-side position (second-gear position), the sleeve S3 spline-engages with the second-gear piece. When the sleeve S3 moves from the non-connected position to a left-hand-side position (fourth-gear position), the sleeve S3 spline-engages with the fourth-gear piece.

The sleeve S4 is always in spline engagement with a hub which rotates unitarily with the output shaft AO such that the sleeve S4 can move in the axial direction. When the sleeve S4 is located at the position (non-connected position) shown in FIG. 1, the sleeve S4 does not spline-engage with a sixth-gear piece which rotates unitarily with the driven gear G6o. When the sleeve S4 moves from the non-connected position to a right-hand-side position (sixth-gear position), the sleeve S4 spline-engages with the sixth-gear piece.

By virtue of the above-described configuration, in the second mechanism section M2, when the sleeves S3 and S4 are maintained at their non-connected positions, there can be established a neutral state in which no power transmission system is formed between the second input shaft Ai2 and the output shaft AO. When the sleeve S3 moves to the second-gear position in the neutral state, a power transmission system having a second-gear speed reduction ratio is formed (second gear is established). When the sleeve S3 moves to the fourth-gear position in the neutral state, a power transmission system having a fourth-gear speed reduction ratio is formed (fourth speed is established). When the sleeve S4 moves to the sixth-gear position in the neutral state, a power transmission system having a sixth-gear speed reduction ratio is formed (sixth gear is established).

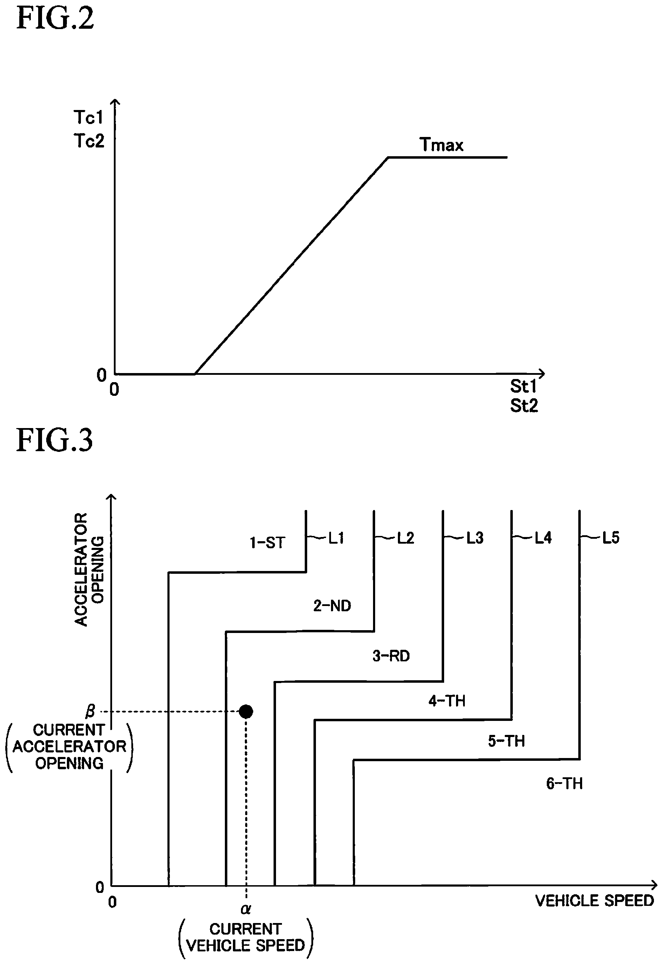

The first and second clutches C1, C2 are coaxially disposed in series in the axial direction. A clutch actuator AC1 adjusts the clutch stroke St1 of the first clutch C1. As shown in FIG. 2, through adjustment of the clutch stroke St1, the maximum torque which the first clutch C1 can transfer (first clutch torque Tc1) can be adjusted. In a state in which Tc1 = 0, a power transmission system is not formed between the output shaft AE of the engine E/G and the first input shaft Ai1. This state will be referred to as a "disengaged state." In a state in which Tc1 > 0, a power transmission system is formed between the output shaft AE of the engine E/G and the first input shaft Ai1. This state will be referred to as an "engaged state." Notably, the term "clutch stroke" means the amount of movement of a friction member (not shown) driven by the clutch actuator, from the original position (clutch stroke = 0) toward a pressing direction (a direction for increasing the clutch torque).

Similarly, a clutch actuator AC2 adjusts the clutch stroke St2 of the second clutch C2. As shown in FIG. 2, through adjustment of the clutch stroke St2, the maximum torque which the second clutch C2 can transfer (second clutch torque Tc2) can be adjusted. For the second clutch C2, a "disengaged state" and an "engaged state" are defined in the same manner as those for the first clutch C1.

Also, the present apparatus includes a wheel speed sensor V1 for detecting wheel speeds of the wheels of the vehicle; an accelerator opening sensor V2 for detecting an amount by which an accelerator pedal AP is operated (accelerator opening); a shift position sensor V3 for detecting the position of a shift lever SF; and a brake hydraulic pressure sensor V4 for detecting a force with which a brake pedal BP is stepped on (which corresponds to the pressure of brake fluid). Notably, the magnitude of brake hydraulic pressure (accordingly, the pressing force of a brake pad against a brake disc; frictional braking force) is adjusted in accordance with the force with which the brake pedal BP is stepped on.

Moreover, the present apparatus includes the electronic control unit ECU. The ECU controls the gear stage of the transmission T/M and the states of the first and second clutches C1, C2 by controlling the clutch actuators AC1, AC2 and the sleeve actuators AS1 to AS4 on the basis of information from the above-described sensors V1 to V4, and other information. As described above, the present apparatus is a power transmission apparatus using a double clutch transmission (DCT). Also, in the present apparatus, the torque output from the output shaft AE of the engine E/G (engine torque) is controlled to a value corresponding to the accelerator opening.

In the present apparatus, when the shift lever SF is located at a position corresponding to an "automatic mode," the gear stage of the transmission T/M is determined on the basis of a gear-shift map, which is shown in FIG. 3 and which is stored in ROM (not shown) of the ECU. More specifically, in the present apparatus, a gear stage to be achieved (hereinafter referred to as a "selected gear stage") is selected on the basis of a gear stage region which corresponds to the combination between a vehicle speed calculated from the wheel speeds obtained from the wheel speed sensor V1 and an accelerator opening obtained from the accelerator opening sensor V2. For example, in the case where the current vehicle speed is α and the current accelerator opening is p (see a black dot shown in FIG. 3), "third gear" is selected as the selected gear stage.

The gear-shift map shown in FIG. 3 can be obtained by repeatedly performing an experiment for selecting the optimum gear for the combination of vehicle speed and accelerator opening, while changing the combination in various ways. This gear-shift map is stored in the ROM of the ECU. Notably, in the case where the shift lever SF is located at a position corresponding to a "manual mode," the selected gear stage is selected on the basis of a driver's operation of the shift lever SF.

In the following description, in order to facilitate description and understanding, the system constituted by the first clutch C1, the first input shaft Ai1, and the first mechanism section M1 will be called the "first system"; and the system constituted by the second clutch C2, the second input shaft Ai2, and the second mechanism section M2 will be called the "second system." Furthermore, of the first and second mechanism sections M1, M2, the first and second clutches C1, C2, the first and second input shafts Ai1, Ai2, and the first and second systems, those corresponding to the selected gear stage will be referred to as the "selected mechanism section," the "selected clutch," the "selected input shaft," and the "selected system"; and those not corresponding to the selected gear stage will be referred to as the "unselected mechanism section," the "unselected clutch," the "unselected input shaft," and the "unselected system."

As described above, in this transmission T/M, odd-numbered gear stages including 1-st (1-st, 3-rd, and 5-th) are selectively established in the first mechanism section M1, and even-numbered gear stages including 2-nd (2-nd, 4-th, and 6-th) are selectively established in the second mechanism section M2. Accordingly, the selected and unselected systems are switched between the first and second systems every time the selected gear stage is changed from the current gear stage to a gear stage which is adjacently located on the higher-speed-side of the current gear stage (upshift) or the selected gear stage is changed from the current gear stage to a gear stage which is adjacently located on the lower-speed-side of the current gear stage (downshift).

In the present apparatus, in the selected mechanism section, the selected gear stage is established, and the clutch torque of the selected clutch is adjusted to a torque larger than the engine torque (hereinafter referred to as the "torque for complete engagement"), whereby the selected clutch is controlled to the completely engaged state in which no slippage occurs. Meanwhile, in the unselected mechanism section, an "adjacent gear stage" is established, and the clutch torque of the unselected clutch is adjusted to zero, whereby the unselected clutch is controlled to the disengaged state.

The adjacent gear stage is a gear stage which is selected (may be selected) after the present selected gear stage; specifically, a gear stage which is adjacently located on the higher-speed-side or lower-speed-side of the currently selected gear stage. In the present apparatus, in accordance with one of known methods, prediction as to whether upshift or downshift will be performed next is performed on the basis of changes in the operation state of the vehicle up to the present (e.g., a change in vehicle speed, a change in engine torque, a change in accelerator opening, etc.). In the case where performance of an upshift is predicted, the adjacent gear stage is set to a "gear stage which is adjacently located on the higher-speed-side of the currently selected gear stage." In the case where performance of a downshift is predicted, the adjacent gear stage is set to a "gear stage which is adjacently located on the lower-speed-side of the currently selected gear stage."

The "torque for complete engagement" may be set to an arbitrary value within a range greater than the engine torque (namely, within a range within which no slippage occurs in the selected clutch). For example, the torque for complete engagement may be set to the maximum value Tmax (see FIG. 2) or a value which is greater than the engine torque by a predetermined amount.

As described above, in a state in which the selected gear stage is maintained in a certain gear stage, a power transmission system having a speed reduction ratio of the selected gear stage is established between the output shaft AE of the engine E/G and the output shaft AO of the transmission T/M through the selected system. As a result, the engine torque can be transmitted to the drive wheels through the selected system.

### (Control at the time of gear shift)

Next, there will be an operation (gear shift operation) performed when the selected gear stage is changed from the currently established gear stage to a gear stage which is adjacently located on the higher-speed-side or lower-speed-side of the currently established gear stage (i.e., upshift or downshift is performed) because of a change in the state of the vehicle (combination of vehicle speed and accelerator opening). In the present apparatus, the operation of switching the selected and unselected clutches between the first and second clutches is realized by simultaneously executing an operation of changing the state of one of the first and second clutches from the engaged state to the disengaged state and an operation of changing the state of the other clutch from the disengaged state to the engaged state (i.e., an "operation of changing the state of the engaged clutch to the disengaged state" and an "operation of changing the state of the disengaged clutch to the engaged state"). As a result, in the case where an upshift or a downshift is performed when the vehicle is traveling, engine torque can be continuously transmitted, without interruption, to the output shaft AE of the transmission T/M (accordingly, to the drive wheels).

Specifically, at the time of switching of the selected clutch and the unselected clutch, the clutch torque of one clutch which has newly become the selected clutch as a result of the switching (hereinafter referred to as the "new selected clutch) is increased from zero and is adjusted to a "selected-side torque," and the clutch torque of the other clutch which has newly become the unselected clutch as a result of the switching (hereinafter referred to as the "new unselected clutch) is decreased from the torque for complete engagement and is adjusted to an "unselected-side torque." The "selected-side torque" is a torque which is larger than zero but smaller than the torque for complete engagement, and the "unselected-side torque" is a torque which is larger than zero but smaller than the selected-side torque. At the same time, the engine torque is decreased from a value corresponding to the accelerator opening.

After that, the engine torque is increased to the value corresponding to the accelerator opening. At the same time, the clutch torque of the new selected clutch is increased from the "selected-side torque" and is adjusted to the "torque for complete engagement," and the clutch torque of the new unselected clutch is decreased from the "unselected-side torque" and is adjusted to zero. As a result of the above-described operation, the gear shift operation can be performed smoothly.

Incidentally, at the time of the above-described gear shift operation, an unavoidable variation is produced in the drive torque transmitted to the drive wheels. Accordingly, if the gear shift operation is performed in a state in which the drive wheels easily slip, for example, when the vehicle travels on a road surface which is low in coefficient of friction (low-µ road surface), the travel state of the vehicle is likely to become instable due to a variation in the drive torque of the drive wheels.

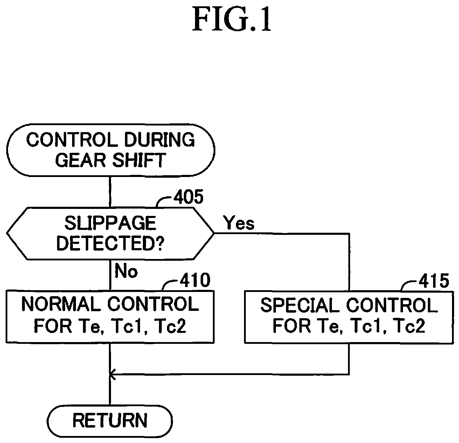

In order to overcome the above-described problem, the present apparatus performs the gear shift operation in different manners depending on whether or not slippage of the drive wheels easily occurs. This point will be described with reference to the flowchart shown in FIG. 4. In step 405, the ECU determines whether or not slippage of the wheels (in particular, the drive wheels) is detected. "Slippage" can be detected by a known method on the basis of, for example, the result of detection by the wheel speed sensor V1 provided for each wheel. Specifically, "slippage" is detected in the case where the difference between the wheel speed and the vehicle body speed calculated on the basis of the result of detection by the wheel speed sensor V1 provided for each wheel is equal to or greater than a predetermined small value.

In the case where slippage of the wheels (in particular, the drive wheels) is not detected ("No" in step 405), in step 410, the ECU executes normal control for the gear shift operation in order to determine Te, Tc1, and Tc2 as follows. In the normal control, the "selected-side torque," the "unselected-side torque," and an "increase gradient employed when the engine torque is increased to the value corresponding to the accelerator opening" are determined on the basis of previously prepared maps. The maps can be obtained by repeatedly performing an experiment for determining respective values of the selected-side torque, the unselected-side torque, and the increase gradient which are optimum for a combination between the vehicle speed and the accelerator opening, while changing the combination in various ways. The maps are stored in ROM provided in the ECU.

Meanwhile, in the case where slippage of the wheels (in particular, the drive wheels) is detected ("Yes" in step 405), in step 415, the ECU executes special control for the gear shift operation in order to determine Te, Tc1, and Tc2 as follows. In the special control, the "selected-side torque," the "unselected-side torque," and the "increase gradient at which the engine torque is increased to the value corresponding to the accelerator opening" are determined to become smaller than those determined on the basis of the above-described maps.

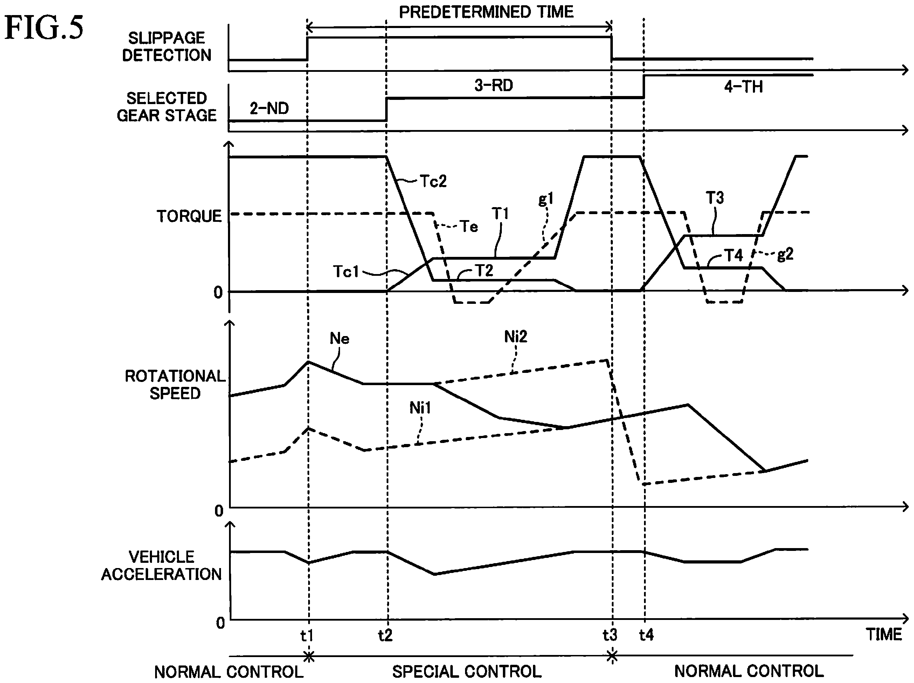

In the example shown in FIG. 5, while the vehicle is traveling in "2-nd," slippage of the drive wheels is detected at time t1 because the drive torque of the drive wheels temporarily exceeds a slippage limit. The "state in which a wheel slippage is detected" is continued over a predetermined period of time (t1 to t3).

In the example shown in FIG. 5, the selected gear stage is changed from "2-nd" to "3-rd" at time t2. As a result, after time t2, a gear shift operation from "2-nd" to "3-rd" is executed. In this gear shift operation, the clutch torque Tc1 of the first clutch C1 which has newly become the selected clutch as a result of the switching is increased from zero and is adjusted to a "selected-side torque" T1, and the clutch torque Tc2 of the second clutch C2 which has newly become the unselected clutch as a result of the switching is decreased from a torque for complete engagement and is adjusted to an "unselected-side torque" T2. At the same time, the engine torque Te is decreased from a value corresponding to the accelerator opening. After that, the engine torque Te is increased to the value corresponding to the accelerator opening at an increase gradient g1. At the same time, the clutch torque Tc1 is increased from the "selected-side torque" T1 and is adjusted to the "torque for complete engagement," and the clutch torque Tc2 is decreased from the "unselected-side torque" T2 and is adjusted to zero.

Also, in the example shown in FIG. 5, the selected gear stage is changed from "3-rd" to "4-th" at time t4. As a result, after time t4, a gear shift operation from "3-rd" to "4-th" is executed. In this gear shift operation, the clutch torque Tc2 of the second clutch C2 which has newly become the selected clutch as a result of the switching is increased from zero and is adjusted to a "selected-side torque" T3, and the clutch torque Tc1 of the first clutch C1 which has newly become the unselected clutch as a result of the switching is decreased from a torque for complete engagement and is adjusted to a "unselected-side torque" T4. At the same time, the engine torque Te is decreased from the value corresponding to the accelerator opening. After that, the engine torque Te is increased to the value corresponding to the accelerator opening at an increase gradient g2. At the same time, the clutch torque Tc2 is increased from the "selected-side torque" T3 and is adjusted to the "torque for complete engagement," and the clutch torque Tc1 is decreased from the "unselected-side torque" T4 and is adjusted to zero.

In the example shown in FIG. 5, the time t2 at which the selected gear stage is changed from "2-nd" to "3-rd" is located within the period during which the "state in which a wheel slippage is detected" continues. Accordingly, the "special control" is executed for the gear shift operation from "2-nd" to "3-rd." Meanwhile, the time t4 at which the selected gear stage is changed from "3-rd" to "4-th" is not located within the period during which the "state in which a wheel slippage is detected" continues. Accordingly, the "normal control" is executed for the gear shift operation from "3-rd" to "4-th."

As a result, in the example shown in FIG. 5, a relation "T1 < T3" stands for the "selected-side torque"; a relation "T2 < T4" stands for the "unselected-side torque"; and a relation "g1 < g2" stands for the "increase gradient of Te." As described above, in the present apparatus, the gear shift operation is performed differently depending on whether or not slippage of the drive wheels easily occurs.

As a result, in a situation where the drive wheels easily slip, the "unselected-side torque" is decreased. Therefore, during a gear shift operation, it becomes easier for the rotational speed Ne of the output shaft AE of the internal combustion engine E/G to approach the rotational speed of the new selected input shaft. In addition, since the "selected-side torque" is decreased, the torque which is transmitted to the drive wheels through the new selected system during the gear shift operation (accordingly, the acceleration of the vehicle) can be decreased. As a result, occurrence of slippage of the wheels (in particular, the drive wheels) can be suppressed. Therefore, the travel state of the vehicle hardly becomes unstable.

## Claims

1. A power transmission control apparatus for a vehicle comprising:
a transmission (T/M) which includes a first input shaft (Ai1) configured to receive power from a drive source (E/G) of a vehicle, a second input shaft (Ai2) configured to receive power from the drive source, (E/G) an output shaft (AO) configured to output power to a drive wheel of the vehicle, a first mechanism section (M1) which is configured to selectively realize an established state in which any one of a first group including one or a plurality of gear stages which are a part of all gear stages to thereby form a power transmission system between the first input shaft (Ai1) and the output shaft (AO) or a release state in which no gear stage of the first group is established and no power transmission system is formed between the first input shaft (Ai1) and the output shaft (AO), and a second mechanism section (M2) which is configured to selectively realize an established state in which any one of a second group including one or a plurality of gear stages which are the remainder of all the gear stages to thereby form a power transmission system between the second input shaft (Ai2) and the output shaft (AO) or a release state in which no gear stage of the second group is established and no power transmission system is formed between the second input shaft (Ai2) and the output shaft (AO);
a first clutch (C1) which is disposed between the output shaft (AO) of the drive source (E/G) and the first input and which is configured to adjust a first clutch torque (Tc1) which is the maximum value of torque which the first clutch (C1) can transmit;
a second clutch (C2) which is disposed between the output shaft (AO) of the drive source (E/G) and the second input and which is configured to adjust a second clutch torque (Tc2) which is the maximum value of torque which the second clutch (C2) can transmit; and
control means configured to control the first and second mechanism sections (M1, M2) and the first and second clutch torques (Tc1, Tc2) on the basis of a travel state of the vehicle and to control the torque of the drive source (E/G) to a value corresponding to an operation quantity of an acceleration operation member operated by a driver of the vehicle, wherein
the control means is configured to determine a selected gear stage on the basis of the travel state of the vehicle, the selected gear stage being a gear stage to be selected from all the gear stages;
the control means is configured to control a selected mechanism section which is one of the first and second mechanism sections (M1, M2) and corresponds to the selected gear stage so as to establish the selected gear stage, to adjust a clutch torque of a selected clutch which is one of the first and second clutches (C1, C2) and which corresponds to the selected mechanism section to a torque for complete engagement larger than the torque of the drive source (E/G) to thereby bring the selected clutch into a completely engaged state in which no slippage occurs, to control an unselected mechanism section which is the other of the first and second mechanism sections (M1, M2) and does not correspond to the selected gear stage so as to establish a gear stage which is adjacently located on the higher-speed-side or lower-speed-side of the selected gear stage, and to adjust a clutch torque of an unselected clutch which is the other of the first and second clutches (C1, C2) and which does not correspond to the selected mechanism section to zero to thereby bring the unselected clutch into a disengaged state; and
the control means is configured to, when switching of the selected and unselected clutches between the first and second clutches (C1, C2) is performed as a result of the selected gear stage being changed from the currently established gear stage to the higher-speed-side or lower-speed-side gear stage, increase the clutch torque of a clutch which has newly become the selected clutch as a result of the switching from zero and to adjust it to a selected-side torque which is larger than zero but smaller than the torque for complete engagement, to decrease the clutch torque of a clutch which has newly become the unselected clutch as a result of the switching from the torque for complete engagement and to adjust it to an unselected-side torque which is larger than zero but smaller than the selected-side torque, to decrease the torque of the drive source (E/G) from the value corresponding to the operation quantity of the acceleration operation member, then increase the torque of the drive source to the value corresponding to the operation quantity of the acceleration operation member, to increase the clutch torque of the clutch which has newly become the selected clutch from the selected-side torque and to adjust it to the torque for complete engagement, and to decrease the clutch torque of the clutch which has newly become the unselected clutch from the unselected-side torque and adjusts it to zero;
**characterized in that**
the control means includes detection means configured to detect slippage of a wheel of the vehicle, and is configured to, in a state in which a slippage of the wheel is detected, as compared with the case where no slippage of the wheel is detected, decrease the selected-side torque and the unselected-side torque, and to decrease an increase gradient at which the torque of the drive source (E/G) is increased to the value corresponding to the operation quantity of the acceleration operation member.

2. A power transmission control apparatus for a vehicle according to claim 1, wherein the control means is configured to continue the state in which a slippage of the wheel is detected, over a predetermined period of time after a point in time when the slippage of the wheel has been detected once.

## Patentansprüche

1. Leistungsübertragungssteuerungsvorrichtung für ein Fahrzeug, aufweisend:
ein Getriebe (T/M), das eine erste Eingangswelle (Ai1), die dazu konfiguriert ist, von einer Antriebsquelle (E/G) eines Fahrzeugs Leistung entgegenzunehmen, eine zweite Eingangswelle (Ai2), die dazu konfiguriert ist, von der Antriebsquelle (E/G) Leistung entgegenzunehmen, eine Ausgangswelle (AO), die dazu konfiguriert ist, Leistung an ein Antriebsrad des Fahrzeugs abzugeben, einen ersten Mechanismus-Abschnitt (M1), der dazu konfiguriert ist, selektiv einen eingelegten Zustand, in dem einer einer ersten Gruppe eingelegt ist, die einen oder mehrere Gänge beinhaltet, die ein Teil aller Gänge sind, um dadurch ein Leistungsübertragungssystem zwischen der ersten Eingangswelle (Ai1) und der Ausgangswelle (AO) auszubilden, oder einen gelösten Zustand umzusetzen, in dem kein Gang der ersten Gruppe eingelegt ist und kein Leistungsübertragungssystem zwischen der ersten Eingangswelle (Ai1) und der Ausgangswelle (AO) ausgebildet ist, und einen zweiten Mechanismus-Abschnitt (M2) aufweist, der dazu konfiguriert ist, selektiv einen eingelegten Zustand, in dem einer einer zweiten Gruppe eingelegt ist, die einen oder mehrere Gänge beinhaltet, die der Rest aller Gänge sind, um dadurch ein Leistungsübertragungssystem zwischen der zweiten Eingangswelle (Ai2) und der Ausgangswelle (AO) auszubilden, oder einen gelösten Zustand umzusetzen, in dem kein Gang der zweiten Gruppe eingelegt ist und kein Leistungsübertragungssystem zwischen der zweiten Eingangswelle (Ai2) und der Ausgangswelle (AO) ausgebildet ist;
eine erste Kupplung (C1), die zwischen der Ausgangswelle (AO) der Antriebsquelle (E/G) und der ersten Eingangswelle angeordnet und dazu konfiguriert ist, ein erstes Kupplungsdrehmoment (Tc1) einzustellen, das der maximale Wert des Drehmoments ist, das die erste Kupplung (C1) übertragen kann;
eine zweite Kupplung (C2), die zwischen der Ausgangswelle (AO) der Antriebsquelle (E/G) und der zweiten Eingangswelle angeordnet und dazu konfiguriert ist, ein zweites Kupplungsdrehmoment (Tc2) einzustellen, das der maximale Wert des Drehmoments ist, das die zweite Kupplung (C2) übertragen kann; und
ein Steuerungsmittel, das dazu konfiguriert ist, den ersten und den zweiten Mechanismus-Abschnitt (M1, M2) und das erste und das zweite Kupplungsdrehmoment (Tc1, Tc2) auf Basis eines Fahrzustands des Fahrzeugs zu steuern und das Drehmoment der Antriebsquelle (E/G) auf einen Wert zu steuern, der einem Betätigungsgrad eines Beschleunigungs-Betätigungselements entspricht, das von einem Fahrer des Fahrzeugs betätigt wird, wobei
das Steuerungsmittel dazu konfiguriert ist, einen ausgewählten Gang auf Basis des Fahrzustands des Fahrzeugs auszuwählen, wobei der ausgewählte Gang ein Gang ist, der aus allen Gängen auszuwählen ist,
das Steuerungsmittel dazu konfiguriert ist, einen ausgewählten Mechanismus-Abschnitt zu steuern, der einer aus dem ersten und dem zweiten Mechanismus-Abschnitt (M1, M2) ist und dem ausgewählten Gang entspricht, um so den ausgewählten Gang einzulegen, ein Kupplungsdrehmoment einer ausgewählten Kupplung, welche eine aus der ersten und der zweiten Kupplung (C1, C2) ist und die dem ausgewählten Mechanismus-Abschnitt entspricht, auf ein Drehmoment für vollständiges Eingerückt-Sein einzustellen, das größer als das Drehmoment der Antriebsquelle (E/G) ist, um dadurch die ausgewählte Kupplung in einen vollständig eingerückten Zustand zu versetzen, in dem kein Schlupf auftritt, einen nicht ausgewählten Mechanismus-Abschnitt, der der andere aus dem ersten und dem zweiten Mechanismus-Abschnitt (M1, M2) ist und nicht dem ausgewählten Gang entspricht, zu steuern, um so einen Gang einzulegen, der auf der Gang-höher-Seite oder Gang-niedriger-Seite des ausgewählten Gangs benachbart angeordnet ist, und ein Kupplungsdrehmoment einer nicht ausgewählten Kupplung, die die andere aus der ersten und der zweiten Kupplung (C1, C2) ist und die nicht dem ausgewählten Mechanismus-Abschnitt entspricht, auf null einzustellen, um dadurch die nicht ausgewählte Kupplung in einen ausgerückten Zustand zu versetzen; und
das Steuerungsmittel dazu konfiguriert ist, wenn ein Schalten der ausgewählten und der nicht ausgewählten Kupplung zwischen der ersten und der zweiten Kupplung (C1, C2) als ein Ergebnis dessen, dass der ausgewählte Gang von dem aktuell eingelegten Gang in den Gang auf der Gang-höher-Seite oder Gang-niedriger-Seite geändert wird, durchgeführt wird, das Kupplungsdrehmoment einer Kupplung, die als ein Ergebnis des Schaltens neuerdings die ausgewählte Kupplung geworden ist, von null aus zu erhöhen und es auf ein Gewählt-Seiten-Drehmoment einzustellen, das größer als null, jedoch kleiner als das Drehmoment für vollständiges Eingerückt-Sein ist, das Kupplungsdrehmoment einer Kupplung, die als ein Ergebnis des Schaltens neuerdings die nicht ausgewählte Kupplung geworden ist, von dem Drehmoment für vollständiges Eingerückt-Sein aus zu verringern und es auf ein Nicht-Gewählt-Seiten-Drehmoment einzustellen, das größer als null, jedoch kleiner als das Gewählt-Seiten-Drehmoment ist, das Drehmoment der Antriebsquelle (E/G) von dem Wert aus zu verringern, der dem Betätigungsgrad des Beschleunigungs-Betätigungselements entspricht, dann das Drehmoment der Antriebsquelle auf den Wert zu erhöhen, der dem Betätigungsgrad des Beschleunigungs-Betätigungselements entspricht, das Kupplungsdrehmoment der Kupplung, die neuerdings die ausgewählte Kupplung geworden ist, von dem Gewählt-Seiten-Drehmoment aus zu erhöhen und es auf das Drehmoment für vollständiges Eingerückt-Sein zu erhöhen und das Kupplungsdrehmoment der Kupplung, die neuerdings die nicht ausgewählte Kupplung geworden ist, von dem Nicht-Ausgewählt-Seiten-Drehmoment aus zu verringern und es auf null einzustellen;
**dadurch gekennzeichnet, dass**
das Steuerungsmittel ein Erfassungsmittel aufweist, das dazu konfiguriert ist, einen Schlupf eines Rads des Fahrzeugs zu erfassen, und dazu konfiguriert ist, in einem Zustand, in dem ein Schlupf des Rads erfasst wird, im Vergleich zu dem Fall, in dem kein Schlupf des Rads erfasst wird, das Gewählt-Seiten-Drehmoment und das Nicht-Gewählt-Seiten-Drehmoment zu verringern und einen Grad der Zunahme, mit dem das Drehmoment der Antriebsquelle (E/G) ansteigt, auf den Wert zu verringern, der dem Betätigungsgrad des Beschleunigungs-Betätigungselements entspricht.

2. Leistungsübertragungssteuerungsvorrichtung für ein Fahrzeug gemäß Anspruch 1, wobei das Steuerungsmittel dazu konfiguriert ist, den Zustand, in dem ein Schlupf des Rads erfasst wird, über einen vorbestimmten Zeitraum nach einem Zeitpunkt fortzusetzen, an dem der Schlupf des Rads ein Mal erfasst wurde.

## Revendications

1. Appareil de commande de transmission de puissance pour un véhicule comprenant :
une transmission (T/M) qui inclut un premier arbre d'entrée (Ai1) configuré pour recevoir la puissance d'une source motrice (E/G) d'un véhicule, un second arbre d'entrée (Ai2) configuré pour recevoir la puissance de la source motrice, (E/G), un arbre de sortie (AO) configuré pour délivrer la puissance à une roue motrice du véhicule, une première section de mécanisme (M1) qui est configurée pour mettre sélectivement en place un état établi dans lequel l'un quelconque d'un premier groupe incluant un étage ou une pluralité d'étages d'engrenages qui sont une partie de tous les étages d'engrenages pour former ainsi un système de transmission de puissance entre le premier arbre d'entrée (Ai1) et l'arbre de sortie (AO) ou un état de libération dans lequel aucun étage d'engrenage du premier groupe n'est établi et aucun système de transmission de puissance n'est formé entre le premier arbre d'entrée (Ai1) et l'arbre de sortie (AO), et une seconde section de mécanisme (M2) qui est configurée pour mettre sélectivement en place un état établi dans lequel l'un quelconque d'un second groupe incluant un étage ou une pluralité d'étages d'engrenages qui sont le reste de tous les étages d'engrenage pour former ainsi un système de transmission de puissance entre le second arbre d'entrée (Ai2) et l'arbre de sortie (AO) ou un état de libération dans lequel aucun étage d'engrenage du second groupe n'est établi et aucun système de transmission de puissance n'est formé entre le second arbre d'entrée (Ai2) et l'arbre de sortie (AO) ;
un premier embrayage (C1) qui est disposé entre l'arbre de sortie (AO) de la source motrice (E/G) et la première entrée et qui est configuré pour ajuster un premier couple d'embrayage (Tc1) qui est la valeur maximale du couple que le premier embrayage (C1) peut transmettre ;
un second embrayage (C2) qui est disposé entre l'arbre de sortie (AO) de la source motrice (E/G) et la seconde entrée et qui est configuré pour ajuster un second couple d'embrayage (Tc2) qui est la valeur maximale du couple que le second embrayage (C2) peut transmettre ; et
un moyen de commande configuré pour commander les première et seconde sections de mécanisme (M1, M2) et les premier et second couples d'embrayage (Tc1, Tc2) sur la base d'un état de roulement du véhicule et pour commander le couple de la source motrice (E/G) à une valeur correspondant à une quantité d'opération d'un organe d'opération d'accélération actionné par un conducteur du véhicule, dans lequel
le moyen de commande est configuré pour déterminer un étage d'engrenage sélectionné sur la base de l'état de roulement du véhicule, l'étage d'engrenage sélectionné étant un étage d'engrenage à sélectionner parmi tous les étages d'engrenage ;
le moyen de commande est configuré pour commander une section de mécanisme sélectionnée qui est l'une des première et seconde sections de mécanisme (M1, M2) et correspond à l'étage d'engrenage sélectionné de manière à établir l'étage d'engrenage sélectionné, pour ajuster un couple d'embrayage d'un embrayage sélectionné qui est l'un des premier et second embrayages (C1, C2) et qui correspond à la section de mécanisme sélectionnée à un couple pour un enclenchement complet plus grand que le couple de la source motrice (E/G) pour ainsi amener l'embrayage sélectionné dans un état complètement enclenché dans lequel aucun glissement ne se produit, pour commander une section de mécanisme non sélectionnée qui est l'autre des première et seconde sections de mécanisme (M1, M2) et ne correspond pas à l'étage d'engrenage sélectionné de manière à établir un étage d'engrenage qui est situé de manière adjacente du côté vitesse supérieure ou du côté vitesse inférieure de l'étage d'engrenage sélectionné, et pour ajuster un couple d'embrayage d'un embrayage non sélectionné qui est l'autre des premier et second embrayages (C1, C2) et qui ne correspond pas à la section de mécanisme sélectionnée à zéro pour ainsi amener l'embrayage non sélectionné dans un état déclenché ; et
le moyen de commande est configuré pour, lorsqu'une commutation des embrayages sélectionnés et non sélectionnés entre les premier et second embrayages (C1, C2) est réalisée à la suite du changement de l'étage d'engrenage sélectionné à partir de l'étage d'engrenage actuellement établi vers l'étage d'engrenage côté vitesse supérieure ou côté vitesse inférieure, augmenter le couple d'embrayage d'un embrayage qui est nouvellement devenu l'embrayage sélectionné à la suite de la commutation depuis zéro et pour l'ajuster à un couple côté sélectionné qui est plus grand que zéro mais plus petit que le couple pour un enclenchement complet, pour diminuer le couple d'embrayage d'un embrayage qui est nouvellement devenu l'embrayage non sélectionné à la suite de la commutation depuis le couple pour un enclenchement complet et pour l'ajuster à un couple côté non sélectionné qui est plus grand que zéro mais plus petit que le couple côté sélectionné, pour diminuer le couple de la source motrice (E/G) depuis la valeur correspondant à la quantité d'opération de l'organe d'opération d'accélération, puis augmenter le couple de la source motrice à la valeur correspondant à la quantité d'opération de l'organe d'opération d'accélération, pour augmenter le couple d'embrayage de l'embrayage qui est nouvellement devenu l'embrayage sélectionné du couple côté sélectionné et pour l'ajuster au couple pour un enclenchement complet, et pour diminuer le couple d'embrayage de l'embrayage qui est nouvellement devenu l'embrayage non sélectionné depuis le couple côté non sélectionné et l'ajuster à zéro ;
**caractérisé en ce que**
le moyen de commande inclut un moyen de détection configuré pour détecter un glissement d'une roue du véhicule, et est configuré pour, dans un état dans lequel un glissement de la roue est détecté, en comparaison au cas où aucun glissement de la roue n'est détecté, diminuer le couple côté sélectionné et le couple côté non sélectionné, et pour diminuer un gradient d'augmentation auquel le couple de la source motrice (E/G) est augmenté à la valeur correspondant à la quantité d'opération de l'organe d'opération d'accélération.

2. Appareil de commande de transmission de puissance pour un véhicule selon la revendication 1, dans lequel le moyen de commande est configuré pour continuer l'état dans lequel un glissement de la roue est détecté, sur une période de temps prédéterminée après un instant où le glissement de la roue a été détecté une fois.
